# DEMANDE DE BREVET EUROPEEN

(11) **EP 0 834 438 A1**
(43) Date de publication de la demande: **08.04.1998**
(21) Numéro de dépôt: 97402084.4
(22) Date de dépôt: 05.09.1997
(51) Int. Cl.: B62D 1/18

(54) **Dispositif de rappel de colonne de direction de véhicule automobile**

(30) Priorité: 04.10.1996 FR 9612226
(71) Demandeur: LEMFORDER NACAM S.A., 41100 Vendome (FR)
(72) Inventeur: Blais, Jean René, 41100 Vendome (FR); Gallou, Laurent, 72340 Ruille Sur Le Loir (FR)
(74) Mandataire: Martinet & Lapoux

(57) **Abrégé**

Dispositif de rappel de colonne de direction de véhicule automobile comportant un arbre de direction (1) monté libre en rotation dans un tube-corps (2), qui est disposé dans un élément support (4) fixé au châssis du véhicule. Le tube-corps (2) est bloqué à la position voulue par un système de réglage en hauteur (5). Le dispositif de rappel est constitué par un élément élastique et souple (10) à profil adaptable à l'environnement, qui est muni à chacune de ses extrémités d'un système d'accrochage.

## Description

La présente invention se rapporte à un dispositif de rappel d'une colonne de direction de véhicule automobile, dont le volant est réglable en hauteur.

Lors du déverrouillage du système de réglage en hauteur du volant, il est nécessaire de faciliter la manoeuvre par le conducteur en soulageant le poids de la colonne par un dispositif, qui ramène l'ensemble mobile, à une position prédéterminée.

Il existe actuellement différents dispositifs, qui permettent un recentrage de la colonne généralement autour de la position milieu de la course de réglage. Un dispositif connu utilise le montage d'un ou deux ressorts à spires travaillant en traction. Cet ensemble présente l'inconvénient d'être bruyant du fait de vibrations. De plus, il est encombrant et il génère des défauts d'équilibrage, et donc des dysfonctionnements au niveau du système de réglage.

Un autre dispositif appliqué consiste en une lame en acier à ressort travaillant en flexion. Il existe aussi un dispositif faisant appel à un ressort à fil travaillant en flexion. Ces deux derniers dispositifs présentent l'inconvénient d'être difficile à implanter, notamment dans les architectures de colonnes de direction existantes. De plus, ils entraînent souvent des frottements parasites lors des réglages axiaux.

Le but de la présente invention est de proposer un dispositif de rappel d'une colonne de direction de véhicules automobiles, qui ramène l'ensemble mobile à une position prédéterminée, lors du déverrouillage du système de réglage en hauteur, tout en permettant une implantation facile sur des architectures existantes, et en évitant les défauts des dispositifs actuellement connus.

Selon un mode de réalisation de l'invention, le dispositif de rappel de colonne de direction de véhicule automobile comporte un arbre de direction, qui est monté libre en rotation dans un tube-corps. Le tube-corps est disposé dans un élément support, qui est fixé au châssis du véhicule. Le tube-corps est bloqué à la position voulue par un système de réglage en hauteur. Le dispositif de rappel selon l'invention est constitué par un élément élastique et souple à profil adaptable à l'environnement, qui est muni d'un ensemble d'accrochage.

Dans une architecture particulièrement intéressante de l'invention, l'élément élastique est monté sur l'élément support, qui est entouré en partie par ledit élément élastique, et dont le système d'accrochage est disposé à chacune de ses extrémités, et coopère avec un élément de l'ensemble mobile en hauteur.

Dans une autre architecture particulièrement intéressante de l'invention, l'élément élastique est disposé sous l'ensemble mobile en hauteur, qui est entouré en partie par ledit élément élastique. L'élément élastique a ses systèmes d'accrochage qui sont disposés à chacune de ses extrémités, et qui coopère avec l'élément support.

Dans une autre architecture particulièrement intéressante de l'invention, l'élément élastique est disposé sous l'ensemble mobile en hauteur, qui est entouré par ledit élément élastique, dont le système d'accrochage coopère avec l'élément support.

Selon l'invention, il existe plusieurs modes de réalisation du système d'accrochage. Dans une première réalisation, le système d'accrochage est constitué par une attache réalisée sous la forme d'une boucle à double largeur, qui est disposée dans l'extrémité correspondante de l'élément élastique. La boucle comporte une entrée circulaire de grand diamètre, qui se prolonge par une partie circulaire d'accrochage de plus petit diamètre. La boucle est constituée par un fil, dont chaque extrémité est munie d'un crochet prolongeant l'entrée circulaire, et se faisant face l'un l'autre de manière à pouvoir s'engager dans l'extrémité correspondante de l'élément élastique.

Dans une autre réalisation de l'invention, le système d'accrochage est constitué par une attache réalisée sous la forme d'une pièce en matière plastique surmoulée sur l'extrémité correspondante de l'élément élastique. Cette pièce comporte un crochet d'amarrage.

Dans une autre réalisation de l'invention, le système d'accrochage est constitué par une attache réalisée sous la forme d'une pièce métallique fixée sur l'extrémité correspondante de l'élément élastique, ladite pièce comportant un crochet d'amarrage.

Dans une autre réalisation de l'invention, le système d'accrochage est constitué par une attache réalisée sous la forme d'une pièce en matière plastique surmoulée sur l'extrémité correspondante de l'élément élastique. Cette pièce comporte une lumière à double largeur formée par une entrée circulaire de grand diamètre, qui se prolonge par une partie circulaire d'accrochage de plus petit diamètre.

Dans une autre réalisation de l'invention, le système d'accrochage est constitué par une attache réalisée par un fil dont la partie centrale est disposée dans l'extrémité correspondante de l'élément élastique. Cette partie centrale se prolonge de chaque côté par un crochet muni d'un retour. Dans une variante, l'âme de l'élément élastique est surmoulée sur la partie centrale.

Selon un mode de réalisation de l'invention, l'architecture du dispositif de rappel est caractérisée en ce que l'élément élastique, qui est monté sur l'élément support, a chacune de ses attaches qui est constitué par la boucle à double largeur. La boucle d'une des attaches s'engage dans une gorge aménagée dans un élément d'accrochage, et la boucle de l'autre attache s'engage dans une autre gorge aménagée sur un autre élément d'accrochage. Les deux éléments d'accrochage sont montés sur la vis du système de réglage en hauteur.

Dans un autre mode de réalisation de l'invention, l'architecture du dispositif de rappel est caractérisé en ce que l'élément élastique, qui est monté sur l'élément support, à chacune de ses attaches qui est constituée par la pièce munie d'un crochet. Chacune desdites pièces s'engage dans un logement aménagé dans un élément d'accrochage muni d'une ouverture débouchant dans ledit logement, de manière que le crochet vienne rentrer et s'amarrer dans ladite ouverture. Les éléments d'accrochage sont montés sur la vis du système de réglage en hauteur.

Dans une autre réalisation de l'invention, l'architecture générale du dispositif de rappel est caractérisée en ce que l'élément élastique, qui est disposé sous l'ensemble mobile en hauteur, à chacune de ses attaches qui est constituée par un fil. Ce fil a une partie centrale qui s'engage dans l'extrémité correspondante de l'élément élastique, et cette partie centrale se prolonge de chaque côté par un crochet muni d'un retour de manière à venir s'amarrer sur une face sensiblement horizontale d'une excroissance aménagée sur l'élément support.

Dans une autre réalisation de l'invention, l'élément élastique, qui est disposé sous l'ensemble mobile en hauteur, est un élément sans fin, dont l'ensemble d'accrochage est constitué par un crochet agencé sur l'élément support pour retenir la partie supérieure dudit élément élastique.

Dans une réalisation particulièrement intéressante de l'invention, l'élément élastique a son âme, qui est constituée par deux éléments solidarisés à chacun des deux systèmes d'accrochage.

Le dispositif de rappel d'une colonne de direction de véhicule automobile suivant l'invention présente ainsi l'avantage d'avoir un encombrement réduit, et de se loger facilement dans les architectures existantes. De plus, le dispositif de l'invention n'entraîne aucun dysfonctionnement du système de réglage, il est silencieux car il ne peut pas vibrer. Le dispositif de l'invention est parfaitement équilibré avec un effort de traction égal de chaque côté, ce qui évite la mise en biais du système de réglage. Enfin, le dispositif de l'invention a des systèmes d'accrochage, qui présentent une absence de frottement parasite lors du réglage en profondeur de la direction.

D'autres caractéristiques et avantages de l'invention ressortiront de la description qui va suivre, donnée à titre d'exemples nullement limitatifs, en référence aux dessins annexés sur lesquels :
- la figure 1 est une vue en coupe transversale passant par l'axe du système de réglage en hauteur d'une colonne de direction de véhicule automobile munie d'un dispositif de rappel selon l'invention;
- la figure 2 est une vue suivant II de la figure 1;
- la figure 3 est une coupe transversale partielle analogue à la figure 1, d'un autre mode de réalisation de l'invention avant encliquetage dans l'élément d'accrochage;
- la figure 4 est une coupe analogue à la figure 3 après encliquetage dans l'élément d'accrochage;
- la figure 5 est une vue en perspective correspondante à la figure 3;
- le figure 6 est une vue en coupe transversale d'un autre mode de réalisation de l'invention;
- la figure 7 est une vue en perspective du détail de l'accrochage d'une des attaches représentées sur la figure 6;
- la figure 8 est une vue en perspective du mode de réalisation de l'élément élastique représenté sur les figures 1 et 2;
- la figure 9 est une vue semblable à la figure 7 d'un autre mode de réalisation de l'invention ;
- la figure 10 est une vue en perspective d'un autre mode de réalisation de l'élément élastique suivant l'invention;
- la figure 11 est une vue en coupe transversale d'un autre mode de réalisation de l'invention; et
- la figure 12 est une vue longitudinale correspondant à la figure 11.

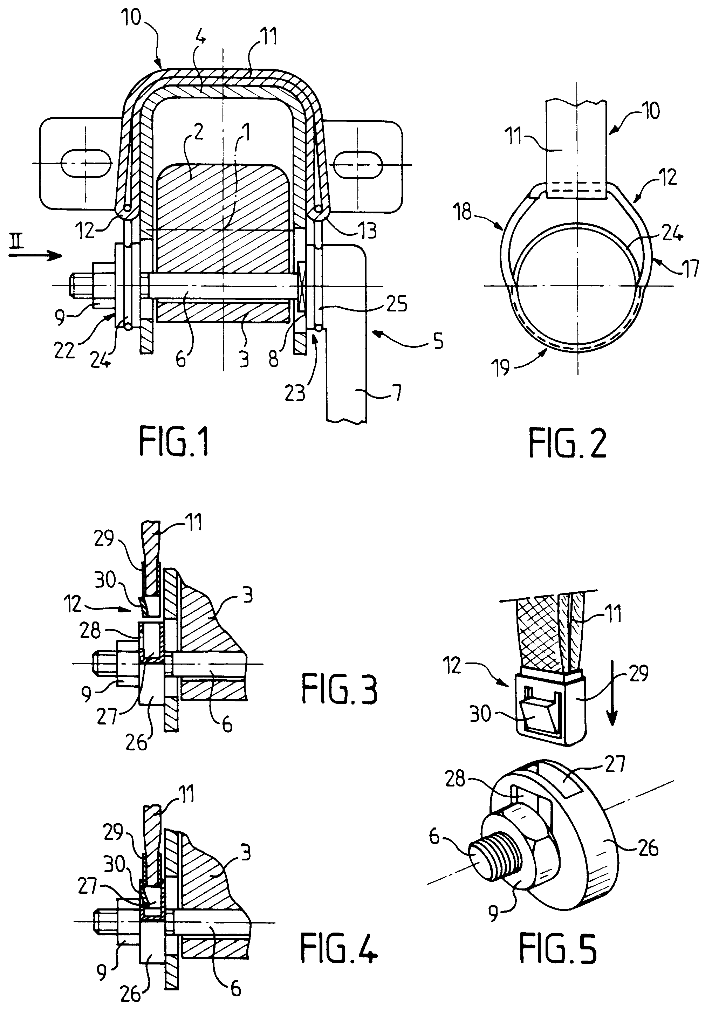

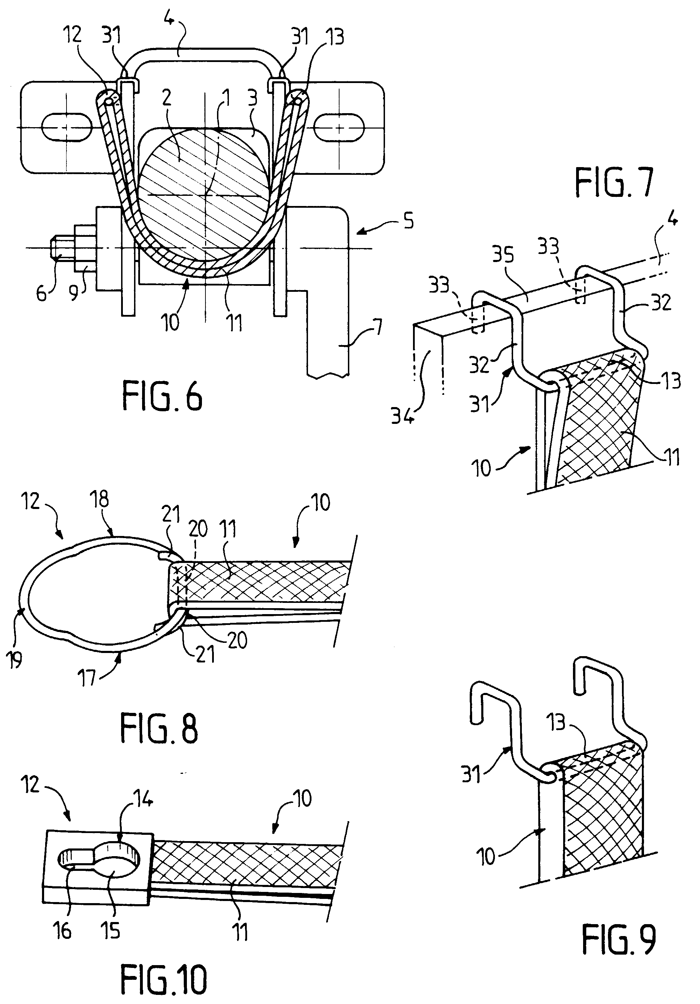

Comme on peut le voir sur les figures 1 et 6, la colonne de direction de véhicule automobile comporte un arbre de direction 1, qui est monté libre en rotation dans un tube-corps 2 muni d'un carré renfort 3. Le tube-corps 2 avec son carré renfort 3 est disposé dans un élément support 4, qui est solidaire du châssis du véhicule automobile. Le tube-corps 2 est réglable en hauteur et éventuellement en profondeur dans le plan vertical, et il est bloqué à la position voulue dans l'élément support 4 par le système de réglage 5 en hauteur de ladite colonne de direction.

Selon l'invention, le dispositif de rappel de la colonne de direction est constitué par un élément élastique et souple 10 à profil adaptable à l'environnement, qui est muni d'un ensemble d'accrochage.

Dans le mode de réalisation de l'invention représenté sur les figures 1, 2 et 8, l'élément élastique 10 est monté sur l'élément support 4. L'élément support 4 est entouré en partie par l'élément élastique 10, dont un système d'accrochage est disposé à chacune de ses extrémités, et coopère avec un élément de l'ensemble mobile en hauteur. Le système d'accrochage est constitué par une attache 12 à une extrémité et par une attache 13 à l'autre extrémité de l'élément élastique 10. Chacune de ces attaches 12 et 13 est réalisée sous la forme d'une boucle 17 à double largeur, qui est disposée dans l'extrémité correspondante de l'élément élastique 10. La boucle 17 comporte une entrée circulaire 18 de grand diamètre, qui se prolonge par une partie circulaire d'accrochage 19 de plus petit diamètre. De plus la boucle 17 est constituée par un fil dont chaque extrémité est munie d'un crochet 20 prolongeant l'entrée circulaire 18, et se faisant face l'un l'autre de manière à pouvoir s'engager dans l'extrémité correspondante de l'élément élastique 10.

Comme on peut le voir sur la figure 8, l'élément élastique 10 a une âme 11 qui est constituée par deux éléments parallèles l'un par rapport à l'autre, qui sont solidarisés à l'attache 12 ou 13 correspondante. Dans la réalisation représentée sur la figure 8, les deux éléments se prolongent l'un l'autre de manière que chacune des boucles 17 puisse s'engager entre ces deux éléments au moyen des deux crochets 20 se terminant par un retour 21.

Ainsi, l'élément élastique 10 est monté sur l'élément support 4, et à chacune de ces attaches 12 et 13, qui est constituée par la boucle 17 à double largeur. La boucle 17 de l'attache 12 s'engage dans une gorge 24, qui est aménagée dans un élément d'accrochage 22, tandis que la boucle 17 de l'attache 13 s'engage dans une gorge 25 qui est aménagée dans un élément d'accrochage 23. Les éléments d'accrochage 22 et 23 sont montés sur la vis 6 du système de réglage en hauteur 5, qui comporte une poignée de manoeuvre 7, une came 8 et un écrou de blocage 9.

Dans le mode de réalisation de l'invention représenté sur les figures 3 , 4 et 5, l'élément élastique 10 est monté sur l'élément support 4, qui est entouré en partie par cet élément élastique 10. L'élément élastique 10 a un système d'accrochage qui est disposé à chacune de ses extrémités, et qui coopère avec un élément de l'ensemble mobile en hauteur.

Le système d'accrochage est constitué par une attache 12 ou 13 réalisé sous la forme d'une pièce 29 en matière plastique qui est surmoulée sur l'extrémité correspondante de l'élément élastique 10. De plus, cette pièce 29 comporte un crochet 30 d'amarrage. Dans une variante de réalisation, le système d'accrochage est constitué par une attache 12 ou 13 réalisée sous la forme d'une pièce 29 métallique fixée sur l'extrémité correspondante de l'élément élastique. Cette pièce 29 comporte également un crochet 30 d'amarrage.

Ainsi, l'élément élastique 10, qui est monté sur l'élément support 4, à chacune de ses attaches 12 et 13 qui est constitué par la pièce 29 munie d'un crochet 30. Chacune de ces pièces 29 s'engage dans un logement 27 aménagé dans un élément d'accrochage 26. Cet élément d'accrochage 26 est muni d'une ouverture 28 qui débouche dans ledit logement 27, de manière que le crochet 30 de la pièce 29 vienne rentrer et s'amarrer dans ladite ouverture 28. Les éléments d'accrochage 26 sont montés sur la vis 6 du système de réglage en hauteur 5 précédemment décrit pour la figure 1.

La figure 10 se rapporte à une autre variante de réalisation de l'élément élastique 10, dont l'âme 11 est constituée par deux éléments solidarisés à chacun des deux systèmes d'accrochage. Chaque système d'accrochage est constitué par une attache 12 ou 13 réalisée sous la forme d'une pièce 14 en matière plastique surmoulée sur l'extrémité correspondante de l'élément élastique. La pièce 14 comporte une lumière à double largeur formée par une entrée circulaire 15 de grand diamètre, qui se prolonge par une partie circulaire d'accrochage 16 de plus petit diamètre.

Dans le mode de réalisation du dispositif de rappel représenté sur les figures 6, 7 et 9 l'élément élastique 10 est disposé sous l'ensemble mobile en hauteur, qui est entouré en partie par ledit élément élastique 10, dont un système d'accrochage est disposé à chacune de ses extrémités, et coopère avec l'élément support 4.

Dans cette dernière réalisation, le système d'accrochage est constitué par une attache réalisée par un fil 31. Ce fil 31 a une partie centrale qui est disposé dans l'extrémité correspondante de l'élément élastique 10, et cette partie centrale se prolonge de chaque côté par un crochet 32 muni d'un retour 33.

Comme on peut le voir sur les figures 6 et 7, l'élément élastique 10 a son âme 11 qui est constituée par deux élément se prolongeant l'un l'autre de manière que chacune des parties centrales du fil 31 correspondant puisse être disposée entre ces deux éléments.

Dans le montage représenté sur les figures 6 et 7, l'élément élastique 10 est disposé sous l'ensemble mobile en hauteur, et à chacune de ses attaches 12 et 13 qui est constituée par le fil 31. Ce fil 31 a sa partie centrale qui est disposée entre les deux éléments de l'âme 11 à l'extrémité correspondante de l'élément élastique 10. Chaque partie centrale se prolonge de chaque côté par un crochet 32 qui est muni d'un retour 33 de manière à venir s'amarrer sur une face 35 sensiblement horizontale d'une excroissance 34 aménagée sur l'élément support 4.

Dans une variante de réalisation représentée sur la figure 9, l'élément élastique 10 a son âme 11 qui est surmoulée sur la partie centrale de chacun des fils 31.

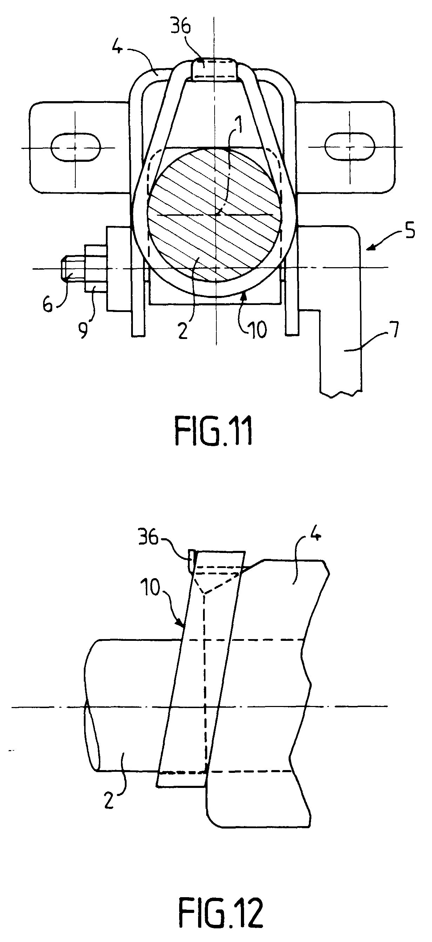

Dans le mode de réalisation représenté sur les figures 11 et 12, l'élément élastique 10 est disposé sous l'ensemble mobile en hauteur. L'élément élastique 10 est un élément sans fin dont l'ensemble d'accrochage est constitué par un crochet 36 agencé sur l'élément support 4 pour retenir la partie supérieure dudit élément élastique 10.

Ainsi selon l'invention en choisissant convenablement le matériau et la section de l'âme 11 de l'élément élastique, il est possible d'obtenir le dispositif de rappel à une position prédéterminée précise compte tenu du poids de l'ensemble mobile.

## Revendications

1. Dispositif de rappel de colonne de direction de véhicule automobile comportant un arbre de direction (1) monté libre en rotation dans un tube-corps (2), qui est disposé dans un élément support (4) fixé au châssis du véhicule, ledit tube-corps (2) étant bloqué à la position voulue par un système de réglage en hauteur (5), caractérisé en ce que ledit dispositif de rappel est constitué par un élément élastique et souple (10) à profil adaptable à l'environnement qui est muni d'un ensemble d'accrochage.

2. Dispositif de rappel selon la revendication 1, caractérisé en ce que l'élément élastique 10 est monté sur l'élément support (4), qui est entouré en partie par ledit élément élastique (10), dont le système d'accrochage disposé à chacune de ses extrémités, coopère avec un élément de l'ensemble mobile en hauteur.

3. Dispositif de rappel selon la revendication 1, caractérisé en ce que l'élément élastique est disposé sous l'ensemble mobile en hauteur, qui est entouré par ledit élément élastique (10), dont le système d'accrochage disposé à chacune de ses extrémités, coopère avec l'élément support (4).

4. Dispositif de rappel selon la revendication 1, caractérisé en ce que l'élément élastique 10 est disposé sous l'ensemble mobile en hauteur, qui est entouré par ledit élément élastique (10), dont le système d'accrochage coopère avec l'élément support (4).

5. Dispositif de rappel selon la revendication 2, caractérisé en ce que le système d'accrochage est constitué par une attache 12 ou 13 réalisé sous la forme d'une boucle (17) à double largeur, qui est disposée dans l'extrémité correspondante de l'élément élastique (10), la boucle (17) comportant une entrée circulaire (18) de grand diamètre, qui se prolonge par une partie circulaire d'accrochage (19) de plus petit diamètre; la boucle (17) étant constituée par un fil dont chaque extrémité est munie d'un crochet 20 prolongeant l'entrée circulaire (18), et se faisant face l'un l'autre de manière à pouvoir s'engager dans l'extrémité correspondante de l'élément élastique (10).

6. Dispositif de rappel selon la revendication 2, caractérisé en ce que le système d'accrochage est constitué par une attache 12 ou 13 réalisée sous la forme d'une pièce (29) en matière plastique surmoulée sur l'extrémité correspondante de l'élément élastique (10), ladite pièce (29) comportant un crochet (30) d'amarrage.

7. Dispositif de rappel selon la revendication 2, caractérisé en ce que le système d'accrochage est constitué par une attache 12 ou 13 réalisée sous la forme d'une pièce (29) métallique fixée sur l'extrémité correspondante de l'élément élastique (10), ladite pièce (29) comportant un crochet (30) d'amarrage.

8. Dispositif de rappel selon la revendication 2, caractérisé en ce que le système d'accrochage est constitué par une attache 12 ou 13 réalisée sous la forme d'une pièce (14) en matière plastique surmoulée sur l'extrémité correspondante de l'élément élastique (10), ladite pièce (14) comportant une lumière à double largeur formée par une entrée circulaire (15) de grand diamètre, qui se prolonge par une partie circulaire d'accrochage (16) de plus petit diamètre.

9. Dispositif de rappel selon la revendication 3, caractérisé en ce que le système d'accrochage est constitué par une attache réalisée par un fil (31), dont la partie centrale est disposée dans l'extrémité correspondante de l'élément élastique (10), ladite partie centrale se prolongeant de chaque côté par un crochet (32) muni d'un retour (33).

10. Dispositif de rappel selon la revendication 3, caractérisé en ce que le système d'accrochage est constitué par une attache réalisée par un fil (31), dont la partie centrale est disposée dans l'extrémité correspondante de l'élément élastique (10), dont l'âme (11) est surmoulée sur la partie centrale, ladite partie centrale se prolongeant de chaque côté par un crochet (32) muni d'un retour (33).

11. Dispositif de rappel selon les revendications 2 et 5, caractérisé en ce que l'élément élastique (10), qui est monté sur l'élément support (4), à chacune de ses attaches 12 ou 13, qui est constituée par la boucle (17) à double largeur; la boucle (17) de l'attache 12 s'engageant dans une gorge (24) aménagée dans un élément d'accrochage (22), la boucle (17) de l'attache (13) s'engageant dans une gorge (25) aménagée dans un élément d'accrochage (23), les éléments d'accrochage (22, 23) étant montés sur la vis (6) du système de réglage en hauteur (5).

12. Dispositif de rappel selon les revendications 2 et 6, caractérisé en ce que l'élément élastique (10), qui est monté sur l'élément support (4), à chacune de ses attaches (12, 13), qui est constitué par la pièce (29) munie d'un crochet (30), chacune desdites pièces (29) s'engageant dans un logement (27) aménagé dans un élément d'accrochage (26) muni d'une ouverture (28) débouchant dans ledit logement (27), de manière que le crochet (30) vienne rentrer et s'amarrer dans ladite ouverture (28), les éléments d'accrochage (26) étant montés sur la vis (6) du système de réglage en hauteur (5).

13. Dispositif de rappel selon les revendications 3 et 9, caractérisé en ce que l'élément élastique (10), qui est disposé sous l'ensemble mobile en hauteur, à chacune de ses attaches (12, 13), qui est constituée par le fil (31), dont la partie centrale est disposée dans l'extrémité correspondante de l'élément élastique (10), ladite partie centrale se prolongeant de chaque côté par un crochet (32) muni d'un retour (33) de manière à venir s'amarrer sur une face (35) sensiblement horizontale d'une excroissance (34) aménagée sur l'élément support (4).

14. Dispositif de rappel selon la revendication 4, caractérisé en ce que l'élément élastique (10), qui est disposé sous l'ensemble mobile en hauteur, est un élément sans fin , dont l'ensemble d'accrochage est constitué par un crochet (36) agencé sur l'élément support 4 pour retenir la partie supérieure dudit élément élastique (10).

15. Dispositif de rappel selon l'une quelconque des revendications 1 à 3, caractérisé en ce que l'élément élastique (10) a son âme (11) qui est constituée par deux éléments solidarisés à chacun des deux systèmes d'accrochage.
